(19) Europäisches Patentamt
European Patent Office
Office européen des brevets

(11) **EP 4 572 396 A1**

(12) **EUROPEAN PATENT APPLICATION**
published in accordance with Art. 153(4) EPC

(43) Date of publication:
**18.06.2025 Bulletin 2025/25**

(21) Application number: **23851725.4**

(22) Date of filing: **04.08.2023**

(51) International Patent Classification (IPC):
***H04W 28/26*** (2009.01)

(52) Cooperative Patent Classification (CPC):
**H04W 28/16; H04W 28/26; H04W 72/12;
H04W 72/50**

(86) International application number:
**PCT/CN2023/111248**

(87) International publication number:
**WO 2024/032504 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 CN 202210946670**

(71) Applicant: **Sharp Kabushiki Kaisha
Sakai City, Osaka 590-8522 (JP)**

(72) Inventors:
• **LUO, Chao
Pudong, Shanghai 201206 (CN)**
• **LIU, Renmao
Pudong, Shanghai 201206 (CN)**
• **ZHAO, Yinan
Pudong, Shanghai 201206 (CN)**

(74) Representative: **Müller Hoffmann & Partner
Patentanwälte mbB
St.-Martin-Straße 58
81541 München (DE)**

(54) **METHOD EXECUTED BY USER EQUIPMENT AND USER EQUIPMENT**

(57) The present invention provides a method performed by user equipment, and user equipment. The method includes: a higher layer requesting or triggering the user equipment to determine a resource subset for a physical sidelink shared channel (PSSCH)/physical sidelink control channel (PSCCH) transmission; and the user equipment reporting pre-emption of a resource to the higher layer.

S101

A higher layer requests determination of a resource subset for a PSSCH/PSCCH transmission

S102

Report pre-emption of a resource to the higher layer

**FIG. 3**

EP 4 572 396 A1

Description

## TECHNICAL FIELD

The present invention relates to the technical field of wireless communications, and in particular to a method performed by user equipment, and corresponding user equipment.

## BACKGROUND ART

In conventional cellular networks, all communication needs to pass through base stations. By contrast, D2D communication (device-to-device communication) refers to a means of communication in which two user equipment units directly communicate with each other without needing to pass through a base station or needing a core network to perform forwarding therebetween. A research project on the use of LTE equipment to implement proximity D2D communication services was approved at the 3rd Generation Partnership Project (3GPP) RAN#63 plenary meeting in March 2014 (see Non-Patent Document 1). The functions introduced in the LTE Release 12 D2D include:

> 1) a discovery function between proximate devices in an LTE network coverage scenario;
> 2) a direct broadcast communication function between proximate devices; and
> 3) support for unicast and group cast communication functions at higher layers.

A research project on enhanced LTE eD2D (enhanced D2D) was approved at the 3GPP RAN#66 plenary meeting in December 2014 (see Non-Patent Document 2). The main functions introduced in the LTE Release 13 eD2D include:

> 1) D2D discovery in out-of-coverage and partial-coverage scenarios; and
> 2) a priority handling mechanism for D2D communication.

Based on the design of the D2D communication mechanism, a V2X feasibility research project based on D2D communication was approved at the 3GPP RAN#68 plenary meeting in June 2015. V2X stands for Vehicle to Everything, and is used to implement information exchange between a vehicle and all entities that may affect the vehicle, for the purpose of reducing accidents, alleviating traffic congestion, reducing environmental pollution, and providing other information services. Application scenarios of V2X mainly include four aspects:

> 1) V2V, Vehicle to Vehicle, i.e., vehicle-to-vehicle communication;
> 2) V2P, Vehicle to Pedestrian, i.e., a vehicle transmits alarms to a pedestrian or a non-motorized vehicle;
> 3) V2N: Vehicle-to-Network, i.e., a vehicle connects to a mobile network;
> 4) V2I: Vehicle-to-Infrastructure, i.e., communication between a vehicle and road infrastructure, etc.

3GPP divides the research and standardization of V2X into three stages. The first stage was completed in September 2016, and mainly focused on V2V and was based on LTE Release 12 and Release 13 D2D (also known as sidelink), that is, the development of proximity communication technologies (see Non-Patent Document 3). V2X stage 1 introduces a new D2D communication interface referred to as a PC5 interface. The PC5 interface is mainly used to address the issue of cellular Internet of Vehicle (IoV) communication in high-speed (up to 250 km/h) and high-node density environments. Vehicles can exchange information such as position, speed, and direction through the PC5 interface, that is, the vehicles can communicate directly through the PC5 interface. Compared with the proximity communication between D2D devices, the functions introduced in LTE Release 14 V2X mainly include:

> 1) higher density DMRS to support high-speed scenarios;
> 2) introduction of sub-channels to enhance resource allocation methods; and
> 3) introduction of a user equipment sensing mechanism having semi-persistent scheduling.

The second stage of the V2X research project belongs to the LTE Release 15 research category (see Non-Patent Document 4). The main features introduced include high-order 64QAM modulation, V2X carrier aggregation, short TTI transmission, as well as feasibility study of transmit diversity.

The corresponding third stage, a V2X feasibility research project based on 5G NR network technologies (see Non-Patent Document 5), was approved at the 3GPP RAN#80 plenary meeting in June 2018.

The 5G NR V2X project supports user equipment sensing-based resource allocation mode 2, or referred to as transmission mode 2. For the user equipment sensing-based resource allocation mode 2, the physical layer of the user equipment senses transmission resources in a resource pool, which means that the user equipment, according to indication information in received SCI transmitted by another user equipment, determines whether to exclude a resource that is in a candidate resource set and that overlaps with a resource indicated by the indication information, and resources that are not excluded from the candidate resource set are reported to a higher layer.

In 5G NR V2X, a pre-emption check mechanism is supported. The pre-emption check means that after the MAC layer selects a resource for sidelink transmission, sensing is performed again on the selected transmission resource at a certain future moment, so as to determine whether the resource has been reserved or pre-empted by another user equipment. If the transmission resource has been reserved or pre-empted by the other user equipment, the MAC layer may trigger resource re-selection to re-select a resource in place of the transmission resource pre-empted by the other user equipment.

A standardization study project based on standardized NR sidelink evolution (abbreviated as NR SL evo) was approved at the 3GPP RAN#95e plenary meeting in March 2022 (see Non-Patent Document 6). The research objectives of NR SL evo include the following aspect:

1) studying and standardizing LTE sidelink and NR sidelink co-channel (or carrier) coexistence, that is, a scenario in which communication frequencies of an LTE sidelink and an NR sidelink are the same or overlap. For the LTE sidelink device and the NR sidelink device that use a common communication frequency, an effective resource allocation mode is designed so as not to affect the communication of the two sidelink devices.

The solution of the present patent mainly includes a method for reporting pre-emption of a transmission resource to a MAC layer by the physical layer of NR sidelink user equipment, or a method for performing resource re-selection by NR sidelink user equipment, in a scenario in which LTE sidelink and NR sidelink co-channel is present.

In the 3GPP RAN1#104bis-e meeting in April 2021, the following conclusions were reached regarding inter-UE coordination in resource allocation mode 2 (see Non-Patent Document 7):

➢ Inter-UE coordination supports the following two schemes:

  ◦ Inter-UE coordination scheme 1 : a coordination message transmitted by UE A to UE B is an indication of a resource set. The resource set includes resources preferred for UE B's transmission, and/or resources non-preferred for UE B's transmission.
  ◦ Inter-UE coordination scheme 2 : a coordination message transmitted by UE A to UE B indicates that an expected (or potential) resource conflict is present on a resource indicated by SCI transmitted by UE B, and/or indicates that a detected resource conflict is present on a resource indicated by SCI transmitted by UE B.

The solution of the present patent is also included in inter-UE coordination scheme 1, and relates to a method for reporting pre-emption of a transmission resource to a MAC layer by the physical layer of NR sidelink user equipment, or a method for performing resource re-selection by NR sidelink user equipment.

Prior Art Document

Non-Patent Documents

Non-Patent Document 1: RP-140518, Work item proposal on LTE Device to Device Proximity Services
Non-Patent Document 2: RP-142311, Work Item Proposal for Enhanced LTE Device to Device Proximity Services
Non-Patent Document 3: RP-152293, New WI proposal: Support for V2V services based on LTE sidelink
Non-Patent Document 4: RP-170798, New WID on 3GPP V2X Phase 2
Non-Patent Document 5: RP-181480, New SID Proposal: Study on NR V2X
Non-Patent Document 6: RP-220300, WID revision: NR sidelink evolution
Non-Patent Document 7: RAN1#104bis-e, Chairman's notes, section 8.11.1.2

## SUMMARY OF THE INVENTION

In order to address at least part of the aforementioned issues, the present invention provides a method performed by user equipment, and user equipment.

A method performed by user equipment according to a first aspect of the present invention comprises: requesting or triggering, by a higher layer, the user equipment to determine a resource subset for a physical sidelink shared channel (PSSCH)/physical sidelink control channel (PSCCH) transmission; The user equipment reports pre-emption of a resource to the higher layer.

In the method according to the first aspect of the present invention, the higher layer selects, from the resource subset, a sidelink resource for the PSSCH/PSCCH transmission, and/or the higher layer requests, in a slot n, the user equipment to determine the resource subset for the PSSCH/PSCCH transmission.

In the method according to the first aspect of the present invention, the higher layer provides a resource set ($r_0'$, $r_1'$, $r_2'$...) in the slot n.

In the method according to the first aspect of the present invention, resources of the resource set ($r_0'$, $r_1'$, $r_2'$, ...) are subject to pre-emption.

In the method according to the first aspect of the present invention, the user equipment reports, to the higher layer, pre-emption of one resource $r_i'$ in the resource set ($r_0'$, $r_1'$, $r_2'$,...).

In the method according to the first aspect of the present invention, the user equipment reporting, to the higher layer, pre-emption of one resource $r_i'$ in the resource set ($r_0'$, $r_1'$, $r_2'$,...) comprises: if the resource $r_i'$ overlaps with a resource indicated by an LTE sidelink module, the user equipment reports pre-emption of the resource $r_i'$ to the higher layer; or the LTE sidelink module of the user equipment indicates a first resource set to an NR sidelink module, and/or the LTE sidelink module of the user equipment indicates a second resource set to the NR sidelink module.

In the method according to the first aspect of the present invention, the first resource set represents reserved resources in LTE sidelink communication, and/or the second resource set represents all candidate resources corresponding to a subframe that is not monitored by the LTE sidelink module.

In the method according to the first aspect of the present invention, if the resource $r_i'$ overlaps with the second resource set, the user equipment reports the pre-emption of the resource $r_i'$ to the higher layer.

User equipment according to a second aspect of the present invention comprises: a processor; and a memory storing instructions, wherein the instructions, when run by the processor, perform the method according to the first aspect.

Beneficial Effects of Present Invention

According to the solution of the present patent, in a scenario of LTE sidelink and NR sidelink co-channel coexistence, it can be ensured that a resource overlapping with a reserved resource indicated by an LTE sidelink module and reported to a MAC layer by a physical layer of an NR sidelink user equipment is a preempted resource. In addition, when the reserved resource indicated by the LTE sidelink module overlaps with a sidelink resource in a selected sidelink grant, the solution of the present patent can ensure that an NR sidelink communication device performs resource reselection with respect to overlapping resources. The above solution avoids the problem of resource conflict in NR sidelink and LTE sidelink co-channel coexistence, and can effectively improve the reliability of NR sidelink.

## BRIEF DESCRIPTION OF THE DRAWINGS

The above and other features of the present invention will be more apparent from the following detailed description in combination with the accompanying drawings, in which:

FIG. 1 is a schematic diagram showing LTE V2X UE sidelink communication.
FIG. 2 is a schematic diagram showing LTE V2X resource allocation modes.
FIG. 3 is a schematic diagram showing a basic procedure of a method performed by user equipment according to Embodiment 1 of the invention.
FIG. 4 is a schematic diagram showing a basic procedure of a method performed by user equipment according to Embodiment 2 of the invention.
FIG. 5 is a block diagram showing a user equipment according to an embodiment of the present invention.

## DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

In the following description, a 5G mobile communication system and later evolved versions thereof are used as exemplary application environments to set forth a plurality of embodiments according to the present invention in detail. However, it is to be noted that the present invention is not limited to the following embodiments, but is applicable to many other wireless communication systems, such as a communication system after 5G and a 4G mobile communication system before 5G.

Some terms involved in the present invention are described below. Unless otherwise specified, the terms used in the present invention use the definitions herein. The terms given in the present invention may vary in LTE, LTE-Advanced, LTE-Advanced Pro, NR, and subsequent communication systems, but unified terms are used in the present invention. When applied to a specific system, the terms may be replaced with terms used in the corresponding system.

3GPP: 3rd Generation Partnership Project
LTE: Long Term Evolution
NR: New Radio
PDCCH: Physical Downlink Control Channel
DCI: Downlink Control Information
PDSCH: Physical Downlink Shared Channel
UE: User Equipment
eNB: evolved NodeB, evolved base station
gNB: NR base station
TTI: Transmission Time Interval
OFDM: Orthogonal Frequency Division Multiplexing
CP-OFDM: Cyclic Prefix Orthogonal Frequency Division Multiplexing
C-RNTI: Cell Radio Network Temporary Identifier
CSI: Channel State Information
HARQ: Hybrid Automatic Repeat Request
CSI-RS: Channel State Information Reference Signal
CRS: Cell Reference Signal
PUCCH: Physical Uplink Control Channel
PUSCH: Physical Uplink Shared Channel
UL-SCH: Uplink Shared Channel
CG: Configured Grant
Sidelink: sidelink
SCI: Sidelink Control Information
PSCCH: Physical Sidelink Control Channel
MCS: Modulation and Coding Scheme
RB: Resource Block
RE: Resource Element
CRB: Common Resource Block
CP: Cyclic Prefix
PRB: Physical Resource Block
PSSCH: Physical Sidelink Shared Channel
FDM: Frequency Division Multiplexing
RRC: Radio Resource Control
RSRP: Reference Signal Receiving Power
SRS: Sounding Reference Signal
DMRS: Demodulation Reference Signal
CRC: Cyclic Redundancy Check
PSDCH: Physical Sidelink Discovery Channel
PSBCH: Physical Sidelink Broadcast Channel
SFI: Slot Format Indication
TDD: Time Division Duplexing
FDD: Frequency Division Duplexing
SIB1: System Information Block Type 1
SLSS: Sidelink Synchronization Signal
PSSS: Primary Sidelink Synchronization Signal
SSSS: Secondary Sidelink Synchronization Signal
PCI: Physical Cell ID
PSS: Primary Synchronization Signal
SSS: Secondary Synchronization Signal
BWP: Bandwidth Part
GNSS: Global Navigation Satellite System
SFN: System Frame Number (radio frame number)
DFN: Direct Frame Number

IE: Information Element
SSB: Synchronization Signal Block
EN-DC: EUTRA-NR Dual Connection, LTE-NR Dual Connectivity
MCG: Master Cell Group
SCG: Secondary Cell Group
PCell: Primary Cell
SCell: Secondary Cell
PSFCH: Physical Sidelink Feedback Channel
SPS: Semi-Persistent Scheduling
TA: Timing Advance
PT-RS: Phase-Tracking Reference Signal
TB: Transport Block
CB: Code Block
QPSK: Quadrature Phase Shift Keying
16/64/256 QAM: 16/64/256 Quadrature Amplitude Modulation
AGC: Automatic Gain Control
TDRA (field): Time Domain Resource Assignment indication (field)
FDRA (field): Frequency Domain Resource Assignment indication (field)
ARFCN: Absolute Radio Frequency Channel Number
SC-FDMA: Single Carrier-Frequency Division Multiple Access
MAC: Medium Access Control
DRX: Discontinuous Reception

The following is a description of the prior art associated with the solution of the present invention. Unless otherwise specified, the same terms in the specific embodiments have the same meanings as in the prior art.

It is worth pointing out that the V2X and sidelink mentioned in the description of the present invention have the same meaning. The V2X herein can also mean sidelink; similarly, the sidelink herein can also mean V2X, and no specific distinction and limitation will be made in the following text.

The resource allocation mode of V2X (sidelink) communication and the transmission mode of V2X (sidelink) communication in the description of the present invention can equivalently replace each other. The resource allocation mode involved in the description can mean a transmission mode, and the transmission mode involved herein can mean a resource allocation mode. In NR sidelink, transmission mode 1 represents a base station scheduling-based transmission mode (resource allocation mode), and transmission mode 2 represents a user equipment sensing-based and resource selection-based transmission mode (resource allocation mode).

The PSCCH in the description of the present invention is used to carry SCI. The PSSCH associated with or relevant to or corresponding to or scheduled by PSCCH involved in the description of the present invention has the same meaning, and all refer to an associated PSSCH or a corresponding PSSCH. Similarly, the SCI (including first stage SCI and second stage SCI) associated with or relevant to or corresponding to PSSCH involved in the description has the same meaning, and all refer to associated SCI or corresponding SCI. It is worth pointing out that the first stage SCI, referred to as 1st stage SCI or SCI format 1-A, is transmitted in the PSCCH, and the second stage SCI, referred to as 2nd stage SCI or SCI format 2-A (or, SCI format 2-B), is transmitted on resources of the corresponding PSSCH.

Numerologies in NR (including NR sidelink) and slots in NR (including NR sidelink)

A numerology includes two aspects: a subcarrier spacing and a cyclic prefix (CP) length. NR supports five subcarrier spacings, which are respectively 15 kHz, 30 kHz, 60 kHz, 120 kHz, and 240 kHz (corresponding to $\mu$ = 0, 1, 2, 3, 4). Table 4.2-1 shows the supported transmission numerologies specifically as follows:

Table 4.2-1 Subcarrier Spacings Supported by NR

| $\mu$ | $\Delta f = 2^{\mu} \cdot 15$[kHz] | CP (cyclic prefix) |
|---|---|---|
| 0 | 15 | Normal |
| 1 | 30 | Normal |
| 2 | 60 | Normal, extended |
| 3 | 120 | Normal |
| 4 | 240 | Normal |

Only when $\mu = 2$, namely, in the case of a 60-kHz subcarrier spacing, is the extended CP supported, and only the normal CP is supported in the case of other subcarrier spacings. For the normal CP, each slot includes 14 OFDM symbols; for the extended CP, each slot includes 12 OFDM symbols. For $\mu = 0$, namely, a 15 kHz subcarrier spacing, one slot = 1 ms; for $\mu = 1$, namely, a 30 kHz subcarrier spacing, one slot = 0.5 ms; for $\mu = 2$, namely, a 60 kHz subcarrier spacing, one slot = 0.25 ms, and so on.

NR and LTE have the same definition for a subframe, which denotes 1 ms. For a subcarrier spacing configuration $\mu$ a slot index in one subframe (1 ms) may be expressed as $n_s^\mu$, and ranges from 0 to $N_{slot}^{subframe,\mu} - 1$. A slot index in one system frame (a duration of 10 ms) may be expressed as $n_{s,f}^\mu$, and ranges from 0 to $N_{slot}^{frame,\mu} - 1$. Definitions of $N_{slot}^{subframe,\mu}$ and $N_{slot}^{frame,\mu}$ for different subcarrier spacings $\mu$ are shown in the tables below.

Table 4.3.2-1: the number of symbols included in each slot, the number of slots included in each system frame, and the number of slots included in each subframe for the normal CP

| P | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 4.3.2-2: the number of symbols included in each slot, the number of slots included in each system frame, and the number of slots included in each subframe for the extended CP (60 kHz)

| P | $N_{symb}^{slot}$ | $N_{slot}^{frame,\mu}$ | $N_{slot}^{subframe,\mu}$ |
|---|---|---|---|
| 2 | 12 | 40 | 4 |

On an NR carrier, a system frame (or simply referred to as frame) number (SFN) ranges from 0 to 1023. The concept of a direct system frame number (DFN) is introduced to sidelink, and the number thereof likewise ranges from 0 to 1023. The above description of the relationship between the system frame and numerology can also be applied to a direct system frame. For example, the duration of one direct system frame is likewise equal to 10 ms; for a 15 kHz subcarrier spacing, one direct system frame includes 10 slots, and so on. The DFN is applied to timing on a sidelink carrier.

Parameter sets in LTE (including LTE V2X) and slots and subframes in LTE (including LTE V2X)

The LTE only supports a 15 kHz subcarrier spacing. Both the extended CP and the normal CP are supported in the LTE. The subframe has a duration of 1 ms and includes two slots. Each slot has a duration of 0.5 ms.

For a normal CP, each subframe includes 14 OFDM symbols, and each slot in the subframe includes 7 OFDM symbols; for an extended CP, each subframe includes 12 OFDM symbols, and each slot in the subframe includes 6 OFDM symbols.

Resource block (RB) and resource element (RE)

The resource block (RB) is defined in the frequency domain as $N_{sc}^{RB} = 12$ consecutive subcarriers. For example, for a 15 kHz subcarrier spacing, the RB is 180 kHz in the frequency domain. For a 15 kHz $\times 2^\mu$ subcarrier spacing, the resource element (RE) represents one subcarrier in the frequency domain and one OFDM symbol in the time domain.

Sidelink communication scenario

1) Out-of-coverage sidelink communication: both of two UEs performing sidelink communication are out of network coverage (for example, the UE cannot detect any cell that meets a "cell selection criterion" on a frequency at which sidelink communication needs to be performed, and that means the UE is out of network coverage).

2) In-coverage sidelink communication: both of two UEs performing sidelink communication are in network coverage (for example, the UE detects at least one cell that meets a "cell selection criterion" on a frequency at which sidelink communication needs to be performed, and that means the UE is in network coverage).

3) Partial-coverage sidelink communication: one of two UEs performing sidelink communication is out of network coverage, and the other is in network coverage.

From the perspective of the UE side, the UE only has two scenarios, out-of-coverage and in-coverage. Partial-coverage is described from the perspective of sidelink communication.

Basic procedure of LTE V2X (sidelink) communication

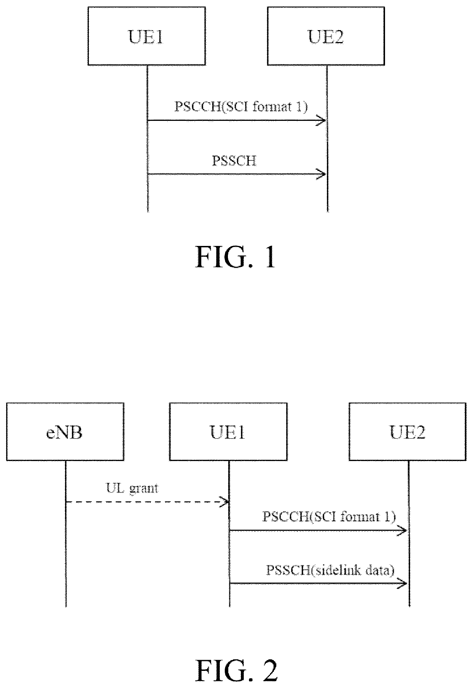

FIG. 1 is a schematic diagram showing LTE V2X UE sidelink communication. First, UE1 transmits to UE2 sidelink control information (SCI format 1), which is carried by a physical layer channel PSCCH. SCI format 1 includes scheduling information of a PSSCH, such as frequency domain resources and the like of the PSSCH. Secondly, UE1 transmits to UE2 sidelink data, which is carried by the physical layer channel PSSCH. The PSCCH and the corresponding PSSCH are frequency division multiplexed, that is, the PSCCH and the corresponding PSSCH are located in the same subframe in the time domain but are located on different RBs in the frequency domain. In LTE V2X, one transport block (TB) may include only one initial transmission, or include one initial transmission and one blind retransmission (indicating a retransmission not based on HARQ feedback).

Specific design methods of the PSCCH and the PSSCH are as follows:

1) The PSCCH occupies one subframe in the time domain and two consecutive RBs in the frequency domain. Initialization of a scrambling sequence uses a predefined value of 510. The PSCCH may carry SCI format 1, wherein SCI format 1 at least includes frequency domain resource information of the PSSCH. For example, for a frequency domain resource indication field, SCI format 1 indicates a starting sub-channel index and the number of consecutive sub-channels of the PSSCH corresponding to the PSCCH.

2) The PSSCH occupies one subframe in the time domain, and uses frequency division multiplexing (FDM) with the corresponding PSCCH. The PSSCH occupies one or a plurality of consecutive subchannels in the frequency domain. The subchannel represents $n_{subCHsize}$ consecutive RBs in the frequency domain, $n_{subCHsize}$ is configured by an RRC parameter, and a starting subchannel and the number of consecutive subchannels are indicated by a frequency domain resource indication field of SCI format 1.

LTE V2X resource allocation modes: transmission mode 3/transmission mode 4

FIG. 2 shows two LTE V2X resource allocation modes, which are referred to as base station scheduling-based resource allocation (transmission mode 3) and UE sensing-based resource allocation (transmission mode 4), respectively. In NR sidelink, transmission mode 3 in LTE V2X corresponds to transmission mode 1 in NR V2X, and is a base station scheduling-based transmission mode, and transmission mode 4 in LTE V2X corresponds to transmission mode 2 in NR V2X, and is a UE sensing-based transmission mode. In LTE V2X, in eNB network coverage, a base station can configure, through UE-level dedicated RRC signaling *SL-V2X-ConfigDedicated,* a resource allocation mode of UE, alternatively referred to as a transmission mode of the UE, which is specifically as follows:

1) Base station scheduling-based resource allocation mode (transmission mode 3): the base station scheduling-based resource allocation mode means that frequency domain resources used in sidelink communication are scheduled by the base station. Transmission mode 3 includes two scheduling modes, which are dynamic scheduling and semi-persistent scheduling (SPS), respectively. For dynamic scheduling, a UL grant (DCI format 5A) includes the frequency domain resources of the PSSCH, and a CRC of a PDCCH or an EPDCCH carrying the DCI format 5A is scrambled by an SL-V-RNTI. For semi-persistent scheduling (SPS), the base station configures one or a plurality of (at most 8) configured grants via *IE: SPS-ConfigSL-r14,* and each configured grant includes a grant index and a resource period of the grant. The UL grant (DCI format 5A) includes the frequency domain resource of the PSSCH, indication information (3 bits) of the grant index, and indication information of SPS activation or release (or deactivation). The CRC of the PDCCH or the EPDCCH carrying the DCI format 5A is scrambled by an SL-SPS-V-RNTI.

Specifically, when RRC signaling *SL-V2X-ConfigDedicated* is set to *scheduled-r14,* same indicates that the UE is configured in the base station scheduling-based transmission mode. The base station configures the SL-V-RNTI or the SL-SPS-V-RNTI by means of RRC signaling, and transmits the UL grant to the UE by means of the PDCCH or the EPDCCH (DCI format 5A, the CRC is scrambled by the SL-V-RNTI or the SL-SPS-V-RNTI). The UL grant at least includes scheduling information of the PSSCH frequency domain resource in sidelink communication. When the UE successfully detects the PDCCH or the EPDCCH scrambled by the SL-V-RNTI or the SL-SPS-V-RNTI, the UE uses a PSSCH frequency domain resource indication field in the UL grant (DCI format 5A) as PSSCH frequency domain resource indication information in a PSCCH (SCI format 1), and transmits the PSCCH (SCI format 1) and a corresponding PSSCH.

For SPS in transmission mode 3, the UE receives, on a downlink subframe n, the DCI format 5A scrambled by the SL-SPS-V-RNTI. If the DCI format 5A includes the indication information of SPS activation, then the UE determines frequency domain resources of the PSSCH according to the indication information in the DCI format 5A, and determines time domain resources of the PSSCH (transmission subframes of the PSSCH) according to information such as the subframe n and the like.

2) UE sensing-based resource allocation mode (transmission mode 4): the UE sensing-based resource allocation mode means that resources used in sidelink communication are based on a procedure of sensing, by the UE, a candidate available resource set. When the RRC signaling *SL-V2X-ConfigDedicated* is set to *ue-Selectedr14,* it indicates that the UE is configured in the UE sensing-based transmission mode. In the UE sensing-based transmission mode, the base station configures an available transmission resource pool, and the UE determines a PSSCH sidelink transmission resource in the transmission resource pool according to a certain rule (for a detailed description of the procedure, see the LTE V2X UE sensing procedure section), and transmits a PSCCH (SCI format 1) and a corresponding PSSCH.

Method for LTE V2X UE to determine PSSCH subframe resource pool

In LTE V2X, a method for determining a subframe resource pool is based on all subframes in a range of SFN#0 to SFN#1023, a total of 10240 subframes. Herein, a subframe set that may belong to a PSSCH subframe resource pool transmitted by V2X UE is represented as ( $t_0^{SL}, t_1^{SL}, ..., t_{T_{max}}^{SL}$ ), which meets the conditions:

1)

$$0 \le t_i^{SL} < 10240,$$

2) subframes in the above subframe set are indexed relative to subframe #0 of SFN#0 or DFN#0, namely, a subframe with $t_i^{SL} = 0$ corresponds to subframe #0 of SFN#0 or DFN#0,

3) the above subframe set includes all subframes after the following subframes (subframes included in a, b, and c) are excluded:

a) subframes configured with an SLSS, the number of which is represented as $N_{SLSS}$;
b) downlink subframes and special subframes in a TDD cell, the number of which is represented as $N_{dssf}$;
c) reserved subframes, where a method for determining the reserved subframes is:
after $N_{SLSS}$ and $N_{dssf}$ subframes are excluded from all subframes with subframe numbers 0-10239, the remaining (10240 - $N_{SLSS}$ - $N_{dssf}$) subframes are arranged in ascending order of subframe numbers, which can be represented herein as ( $l_0$) $l_1, ... , l_{10240-NSLSS-Ndssf-1}$ ). r = floor(m-(10240-$N_{SLSS}$-$N_{dssf}$)/$N_{reserved}$), where *m* = 0, 1, ..., $N_{reserved}$ - 1, and $N_{reserved}$ = (10240 - $N_{SLSS}$ - *Ndssf*) mod $L_{bitmap}$, $L_{bitmap}$ represents the length of a bitmap configured for the resource pool, and is configured by a higher layer, the bitmap can be represented as ($b_0, b_1, ..., b_{Lbitmap-1}$), and a subframe numbered corresponding to the subframe $l_r$ is a reserved subframe; and

4) the subframes in the subframe set are arranged in ascending order of subframe numbers.

A method used by the UE to determine the PSSCH subframe resource pool is as follows: for subframe $t_k^{SL}$ in the subframe set ( $t_0^{SL}, t_1^{SL}, ..., t_{T_{max}}^{SL}$ ), if $b_{k'}$ = 1, where k' = k mod $L_{bitmap}$, then subframe $t_k^{SL}$ belongs to the PSSCH subframe resource pool.

Reserved resource for LTE V2X transmission mode 4

In LTE V2X transmission mode 4, when UE determines resources for sidelink communication transmission through a sensing procedure, the UE reserves resources for periodic traffic data. Assuming that a subframe resource determined by the UE for transmitting a PSSCH is represented as subframe $t_m^{SL}$, then the UE reserves the resource in subframe $t_{m+j \times P_{rsvp\_TX'}}^{SL}$, where $j = 1, 2, ..., C_{resel}$ - 1, $C_{resel} = 10 \times$ *SL_RESOURCE_RESELECTION_COUNTER,* and *SL_RESOURCE_RESELECTION_COUNTER* is configured by a higher layer. If the higher layer does not configure the parameter, then $C_{resel} = 1$. $P_{rsvp\_TX'} = P_{step} \times P_{rsvp\_TX}/100$. LTE V2X includes a periodic traffic, and the period of traffic generation is approximately $P_{serv} = 100$ ms, where $P_{step}$ represents the number of uplink subframes available in $P_{serv}$. Table 1 below shows the values of $P_{step}$ for different TDD uplink and downlink configuration information in LTE V2X. For example, for TDD UL/DL configuration information 2, each system frame includes two uplink subframes. In a traffic period of $P_{serv} = 100$ ms, there are a total of 20 uplink subframes. Table 1 shows determination of $P_{step}$ for edge connection transmission modes 3 and 4, as shown in the following table for details.

Table 1 Determination of $P_{step}$

|  | $P_{step}$ |
|---|---|
| TDD UL/DL configuration information 0 | 60 |
| TDD UL/DL configuration information 1 | 40 |
| TDD UL/DL configuration information 2 | 20 |
| TDD UL/DL configuration information 3 | 30 |
| TDD UL/DL configuration information 4 | 20 |
| TDD UL/DL configuration information 5 | 10 |
| TDD UL/DL configuration information 6 | 50 |
| Other | 100 |

$P_{rsvp\_TX}$ represents a resource reservation interval indicated by a higher layer.

Determination of resource reservation indication field in SCI format 1 performed by LTE V2X UE

A resource reservation interval indicated by higher layers is represented as $P_{rsvp\_TX}$. UE determines the value of $X = P_{rsvp\_TX}/100$ according to the indication of the higher layers, and in conjunction with the following Table 2, the UE can determine a resource reservation indication field (4-bit indication field) in SCI.

Table 2

| Resource reservation indication field in SCI | X | Specific description |
|---|---|---|
| '0001', '0010', ..., '1010' | Value of indication field in SCI | $1 \leq X \leq 10$. |
| '1011' | 0.5 | X = 0.5 |
| '1100' | 0.2 | X = 0.2 |
| '0000' | 0 | Higher layers indicate no reserved resources |
| '1101', '1110', '1111' | Reserved value | |

UE sensing procedure in LTE V2X Transmission Mode 4

For a UE sensing procedure, generally speaking, in LTE V2X Transmission Mode 4, an upper layer requests in subframe #n that sidelink data needs to be transmitted. In subframe $t_{n'-10 \times P_{step}}^{SL}, t_{n'-10 \times P_{step}+1}^{SL}, \cdots, t_{n'-1}^{SL}$, the UE monitors SCI format 1 transmitted by another UE, and the UE determines, according to the successfully decoded SCI format 1, an available resource in a candidate resource set between subframe #(n + T1) and subframe #(n + T2), and reports the determined available resource to the upper layer. If subframe #n belongs to a subframe set (

$t_0^{SL}, t_1^{SL}, ..., t_{Tmax}^{SL}$ ), then $t_{n'}^{SL} = n$ , otherwise, $t_{n'}^{SL}$ indicates the first subframe belonging to the subframe set ( $t_0^{SL}, t_1^{SL}, ..., t_{Tmax}^{SL}$ ) after subframe #n. T1 and T2 depend on a specific implementation of the UE.

Each element in the candidate resource set between subframe #(n + T1) and subframe #(n + T2), namely, each candidate resource, can be referred to as a candidate single subframe resource, which is represented using $R_{x,y}$. The specific definition of $R_{x,y}$ is:

1) x represents $L_{subCH}$ consecutive sub-channels #(x + j) in the frequency domain, where j = 0, 1, ..., $L_{subCH}$ - 1; and

2) y represents a time domain subframe $t_y^{SL}$ .

The UE assumes that between subframe #(n + T1) and subframe #(n + T2), any $L_{subCH}$ consecutive sub-channels belonging to a PSSCH resource pool correspond to one candidate single subframe resource. The candidate resource set is represented using $S_A$.

A resource reservation indication field in the SCI format 1 received by the UE in subframe $t_m^{SL}$ is denoted as $P_{rsvp\_RX}$. If PSSCH resource blocks and subframe resources indicated in SCI format 1 and received by the UE in subframe $t_m^{SL}$, or indicated in the same SCI format 1 and assumed by the UE to be received in subframe $t_{m+q \times P_{step} \times P_{rsvp\_RX}}^{SL}$, overlap or partially overlap with a candidate single subframe resource $R_{x,y+j \times P_{rsvp\_TX'}}$ (comparison of RSRP also needs to be performed in a UE sensing procedure, and details thereof will not be described in the present invention), then the UE excludes the candidate single subframe resource $R_{x,y}$ from $S_A$, where q = 1, 2, ..., Q, and j = 1, 2, ..., $C_{resel}$-1. If $P_{rsvp\_RX}$ < 1 and n' - m ≤ $P_{step}$ × $P_{rsvp\_RX}$, then Q = 1/$P_{rsvp\_RX}$. Otherwise, Q = 1.

According to methods including, but not limited to, the above method, after the UE performs the sensing, the UE reports candidate single subframe resources that are not excluded to higher layers, so that the higher layers (e.g., the MAC layer) perform sidelink resource selection.

<u>Non-monitored subframes in LTE V2X resource allocation mode 4</u>

In LTE sidelink communication, the user equipment is limited to half-duplex. That is, when the user equipment performs sidelink communication transmission in a subframe, the user equipment cannot perform sidelink communication reception in the subframe; similarly, when the user equipment performs sidelink communication reception in a subframe, the user equipment cannot perform sidelink communication transmission in the subframe. For subframes in LTE sidelink resource allocation mode 4 that are not monitored by the user equipment, the LTE sidelink user equipment excludes all candidate resources in the resource selection window corresponding to these non-monitored subframes.

Specifically, if the LTE sidelink UE does not monitor in a subframe $t_z^{SL}$, the UE will exclude all candidate single subframe resources $R_{x, y}$ meeting the following condition: there is an integer j satisfying y + j × $P_{rsvp\_TX'}$ = z + q × $P_{step}$ × k, where $j$ = 0, 1, 2, ..., $C_{resel}$-1, and k represents any value included in a higher layer parameter *restrictResourceReservationPeriod*. The higher layer parameter *restrictResourceReservationPeriod* indicates the reservation interval of all resources supported in the resource pool. q = 1, 2, ..., Q. If k < 1 and n' - z ≤ $P_{step}$ × k, then Q = 1 / k. Otherwise, Q = 1.

That is, all excluded candidate single subframe resources $R_{x,y}$ are referred to as all candidate resources corresponding to non-monitored subframes.

<u>Sidelink resource pool</u>

In sidelink, resources transmitted and received by UE all belong to resource pools. For example, for a base station scheduling-based transmission mode in sidelink, the base station schedules transmission resources for sidelink UE in a resource pool; alternatively, for a UE sensing-based transmission mode in sidelink, the UE determines a transmission resource in a resource pool.

<u>Resource allocation mode based on (partial) sensing</u>

For a resource allocation mode based on (partial) sensing, sidelink user equipment selects a candidate resource within one time window, determines, according to a reserved resource indicated by a PSCCH transmitted by another user equipment in a monitoring slot, candidate resources overlapping with the reserved resource, and excludes the foregoing candidate resources overlapping with the reserved resource. The physical layer reports, to the MAC layer, a set of candidate resources that are not excluded, and the MAC layer selects transmission resources for the PSSCH/PSCCH. A set of transmission resources selected by the MAC layer is referred to as a selected sidelink grant.

The resource allocation mode based on sensing (full sensing) means that the set of slots monitored by the user equipment is consecutive slots in a monitoring window (sensing window).

The resource allocation mode based on partial sensing includes two parts, i.e., periodic-based partial sensing (PBPS) and contiguous partial sensing. The PBPS means that a candidate slot corresponds to one or a plurality of periodic monitoring slots. The CPS means that continuous slot monitoring is performed within a particular monitoring window.

Resource selection window [n + T1, n + T2]

In a resource allocation mode based on sensing (or, partial sensing), a higher layer requests or triggers, in a slot n, the physical layer to determine a resource for PSSCH/PSCCH transmission (to perform sensing or partial sensing). The resource selection window is defined as [n + T1, n + T2]. That is, user equipment selects a transmission resource within the foregoing window. T1 satisfies the condition $0 \leq T1 \leq T_{proc,1}^{SL}$, and the selection of T1 is up to user equipment implementation. RRC configuration information includes a resource selection window configuration list *sl-SelectionWindowList,* and an element on the list and corresponding to a given priority *prio$_{TX}$* (the priority of transmitting the PSSCH) is represented by $T_{2min}$. If $T_{2min}$ is less than a remaining packet delay budget (PDB), T2 satisfies the condition $T_{2min} \leq T2 \leq$ remaining PDB, and the selection of T2 is up to user equipment implementation; otherwise, T2 is set to the remaining PDB.

$T_{proc,1}^{SL}$ is defined as follows ($\mu_{SL}$ represents a sidelink subcarrier spacing parameter, that is, the subcarrier spacing is $2^{\mu SL} \times 15$kHz):

Table 8.1.4-2: Values of $T_{proc,1}^{SL}$.

| $\mu$ SL | $T_{proc,1}^{SL}$ [slots] |
|---|---|
| 0 | 3 |
| 1 | 5 |
| 2 | 9 |
| 3 | 17 |

Table 8.1.4-1: Values of $T_{proc,0}^{SL}$.

| $\mu$ SL | $T_{proc,0}^{SL}$ [slots] |
|---|---|
| 0 | 1 |
| 1 | 1 |
| 2 | 2 |
| 3 | 4 |

Sidelink user equipment with dual module

In a scenario with LTE sidelink and NR sidelink co-channel co-existence, at least sidelink user equipment equipped with both an LTE sidelink module and an NR sidelink module is supported, that is, the sidelink user equipment can not only perform the transmission and reception functions of LTE sidelink communication, but can also perform the transmission and reception functions of NR sidelink communication. It should be noted that, in this type of user equipment, an LTE sidelink module may share (or indicate) information to an NR sidelink module, wherein the information may be resource reservation information of the LTE sidelink, sensing information, or the like. The NR sidelink module may also acquire resource pool configuration information of the LTE sidelink, configuration information of the LTE sidelink SLSS, etc., i.e., including, but not limited to, the above information, without the need for sharing (or indicating) by the LTE sidelink module.

Pre-emption check in NR sidelink

The pre-emption check means that after the MAC layer selects a resource for sidelink transmission, sensing is performed again on the selected transmission resource at a certain future moment, so as to determine whether the resource has been reserved or pre-empted by another user equipment. If the transmission resource has been reserved or pre-empted by the other user equipment, the MAC layer may trigger resource re-selection to re-select a resource in place of the transmission resource reserved or pre-empted by the other user equipment.

Inter-UE coordination

Inter-UE coordination supports the following two schemes:

◦ Inter-UE coordination scheme 1 : a coordination message transmitted by UE A to UE B is an indication of a resource set. The resource set includes resources preferred for UE B's transmission, and/or resources non-preferred for UE B's transmission.
◦ Inter-UE coordination scheme 2 : a coordination message transmitted by UE A to UE B indicates that an expected (or potential) resource conflict is present on a resource indicated by SCI transmitted by UE B, and/or indicates that a detected resource conflict is present on a resource indicated by SCI transmitted by UE B.

In the description of the present invention, UE A transmitting the coordination message and UE B receiving the coordination message are both referred to as sidelink user equipment.

Hereinafter, specific examples and embodiments related to the present invention are described in detail. In addition, as described above, the examples and embodiments described in the present disclosure are illustrative descriptions for facilitating understanding of the present invention, rather than limiting the present invention.

[Embodiment 1]

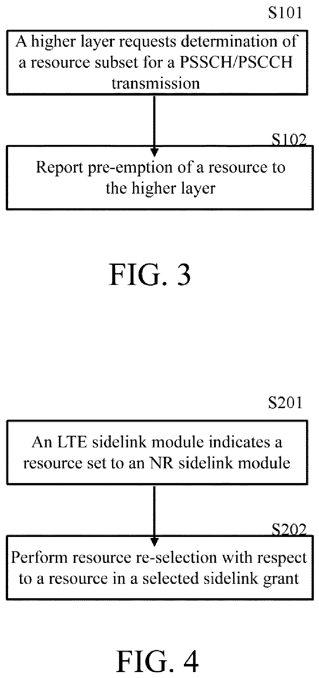

FIG. 3 is a schematic diagram showing a basic procedure of a method performed by user equipment according to Embodiment 1 of the present invention.

The method performed by user equipment according to Embodiment 1 of the present invention is described in detail below in conjunction with the basic procedure diagram shown in FIG. 3.

As shown in FIG. 3, in Embodiment 1 of the present invention, the steps performed by the user equipment include: in step S101, a higher layer (or an upper layer) requests (or triggers) sidelink user equipment (the physical layer) to determine a resource subset for a PSSCH/PSCCH transmission.

The higher layer selects a sidelink resource for the PSSCH/PSCCH transmission from the resource subset.

Optionally, the higher layer requests, in a slot n, the user equipment to determine the resource subset for the PSSCH/PSCCH transmission.

Optionally, the higher layer provides a resource set ($r_0'$, $r_1'$, $r_2'$,...) on the slot n. Optionally, resources of the resource set are subject to the pre-emption (check).

In step S102, the sidelink user equipment reports to the higher layer (MAC layer) that one resource $r_i'$ in the resource set ($r_0'$, $r_1'$, $r_2'$,...) is preempted.

Optionally, if the resource $r_i'$ overlaps with a resource indicated (or shared) by an LTE sidelink module, then the sidelink user equipment reports to a higher layer (MAC layer) that the resource $r_i'$ is pre-empted

Alternatively,

Optionally, the LTE sidelink module of the sidelink user equipment indicates to (or shares with) an NR sidelink module a first resource set. Optionally, the first resource set represents reserved resources in the LTE sidelink communication (by other LTE sidelink user equipments). Additionally/alternatively, the LTE sidelink module of the sidelink user equipment indicates to (or shares with) the NR sidelink module a second resource set. Optionally, the second resource set represents all candidate resources corresponding to a subframe that is not monitored by the LTE sidelink module. If the resource $r_i'$ overlaps with the second resource set, then the sidelink user equipment reports to the higher layer (MAC layer) that the resource $r_i'$ is pre-empted.

[Embodiment 2]

FIG. 4 is a schematic diagram showing a basic procedure of a method performed by user equipment according to Embodiment 2 of the present invention.

A method performed by user equipment according to Embodiment 2 of the present invention will be described in detail below with reference to the basic procedure diagram shown in FIG. 4.

As shown in FIG. 4, in Embodiment 2 of the present invention, steps performed by the user equipment include: In step 201, an LTE sidelink module of a sidelink user equipment indicates to (or shares with) an NR sidelink module a first resource set and/or a second resource set.

Optionally, the first resource set represents reserved resources in LTE sidelink communication (by other LTE sidelink user equipments).

Optionally, the second resource set represents all candidate resources corresponding to a subframe that is not monitored by the LTE sidelink module.

In step S202, the sidelink user equipment performs resource re-selection with respect to a resource r in a selected sidelink grant.

Optionally, step S202 at least satisfies the following: If the resource r overlaps with the first resource set and/or the second resource set, then, optionally, the user equipment removes the resource r from the selected sidelink grant, and, optionally, selects a time-frequency sidelink resource (from the resource set indicated by the physical layer), and, optionally, replaces the removed resource r with the selected time-frequency sidelink resource.

[Embodiment 3]

In Embodiment 3 of the present invention, the steps performed by user equipment include:
In step 1, a higher layer (or an upper layer) requests (or triggers) a sidelink user equipment (the physical layer) to determine a resource subset for a PSSCH/PSCCH transmission.

The higher layer selects, from the resource subset, a sidelink resource for the PSSCH/PSCCH transmission.

Optionally, the higher layer requests, in a slot n, the user equipment to determine the resource subset for the PSSCH/PSCCH transmission.

Optionally, the higher layer provides a resource set $(r_0', r_1', r_2', ...)$ on the slot n. Optionally, resources of the resource set are subject to the pre-emption (check).

In step 2, the sidelink user equipment reports to the higher layer (MAC layer) that one resource $r_i'$ in the resource set $(r_0', r_1', r_2', ..)$ is preempted.

Optionally, if the resource $r_i'$ overlaps with a non-preferred resource set for transmission, then the sidelink user equipment reports to the higher layer (MAC layer) that the resource $r_i'$ is pre-empted.

[Embodiment 4]

In Embodiment 4 of the present invention, the steps performed by a user equipment include:
In step 1, a sidelink user equipment receives a non-preferred resource set for transmission.

In step 2, the sidelink user equipment performs resource re-selection with respect to a resource r in a selected sidelink grant.

Optionally, step 2 at least satisfies the following: If the resource r overlaps with the non-preferred resource set for transmission, then, optionally, the user equipment removes the resource r from the selected sidelink grant, and, optionally, selects a time-frequency sidelink resource (from the resource set indicated by the physical layer), and, optionally, replaces the removed resource r with the selected time-frequency sidelink resource.

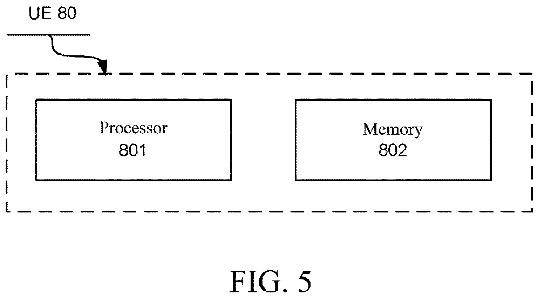

FIG. 5 is a block diagram showing user equipment (UE) involved in the present invention. As shown in FIG. 5, the user equipment (UE) 80 includes a processor 801 and a memory 802. The processor 801 may include, for example, a microprocessor, a microcontroller, an embedded processor, and the like. The memory 802 may include, for example, a volatile memory (such as a random access memory (RAM)), a hard disk drive (HDD), a non-volatile memory (such as a flash memory), or other memories, etc. The memory 802 has program instructions stored thereon. The instructions, when run by the processor 801, can perform the method executed by the user equipment described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment illustrated above may include more modules. For example, the network node and user equipment may further include modules that can be developed or will be developed in the future to be applied to a base station, an MME, or UE, and the like. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments.

It should be understood that the above-described embodiments of the present invention may be implemented by software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present application, the "base station" may refer to a mobile communication data and control exchange center having large transmission power and a wide coverage area, including functions such as resource allocation and scheduling and data reception and transmission. "User equipment" may refer to user mobile terminals, such as terminal devices that can communicate with a base station or a micro base station wirelessly, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the terminal device used in each of the above embodiments may be implemented or executed by circuits, which are usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by user equipment, comprising:

   a higher layer requesting or triggering the user equipment to determine a resource subset for a physical sidelink shared channel (PSSCH)/physical sidelink control channel (PSCCH) transmission; and
   the user equipment reporting pre-emption of a resource to the higher layer.

2. The method according to claim 1, wherein

   the higher layer selects, from the resource subset, a sidelink resource for the PSSCH/PSCCH transmission, and/or
   the higher layer requests, in a slot n, the user equipment to determine the resource subset for the PSSCH/PSCCH transmission.

3. The method according to claim 1 or 2, wherein
   the higher layer provides a resource set ($r_0'$, $r_1'$, $r_2'$, ...) on the slot n.

4. The method according to claim 3, wherein

resources of the resource set ($r'_0$, $r'_1$, $r'_2$, ...) are subject to pre-emption.

5. The method according to claim 4, wherein
the user equipment reports pre-emption of one resource $r_i'$ in the resource set ($r'_0$, $r'_1$, $r'_2$, ...) to the higher layer.

6. The method according to claim 5, wherein
the user equipment reporting pre-emption of one resource $r_i'$ in the resource set ($r'_0$, $r'_1$, $r'_2$, ...) to the higher layer comprises:

   if the resource $r_i'$ overlaps with a resource indicated by an LTE sidelink module, the user equipment reporting pre-emption of the resource $r_i'$ to the higher layer; or
   the LTE sidelink module of the user equipment indicating a first resource set to an NR sidelink module, and/or the LTE sidelink module of the user equipment indicating a second resource set to the NR sidelink module.

7. The method according to claim 6, wherein

   the first resource set represents reserved resources in LTE sidelink communication, and/or
   the second resource set represents all candidate resources corresponding to a subframe that is not monitored by the LTE sidelink module.

8. The method according to claim 7, wherein
if the resource $r_i'$ overlaps with the second resource set, the user equipment reporting pre-emption of the resource $r_i'$ to the higher layer.

9. User equipment, comprising:

   a processor; and
   a memory storing instructions,
   wherein the instructions, when run by the processor, perform the method according to any one of claims 1 to 8.

FIG. 1

FIG. 2

S101

A higher layer requests determination of a resource subset for a PSSCH/PSCCH transmission

S102

Report pre-emption of a resource to the higher layer

FIG. 3

S201

An LTE sidelink module indicates a resource set to an NR sidelink module

S202

Perform resource re-selection with respect to a resource in a selected sidelink grant

FIG. 4

UE 80

| Processor 801 | Memory 802 |

## FIG. 5

## INTERNATIONAL SEARCH REPORT

| International application No. |
|---|
| **PCT/CN2023/111248** |

| A. | CLASSIFICATION OF SUBJECT MATTER |
|---|---|

H04W28/26(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: LTE, NR, report, sidelink, SL, co-channel, coexist+, pre-emption, PSSCH, PSCCH, set, subset, overlap, reserv+, monitor, MAC, PHY, higher layer, lower layer, 高层, 上层, 低层, 下层, 报告, 上报, 侧行, 侧链, 旁链, 边链, 副链, 共信道, 共存, 先占, 抢占, 集, 子集, 重叠, 交叠, 预留, 监控, 监听

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2022086803 A1 (ASUSTEK COMPUTER INC.) 17 March 2022 (2022-03-17) description, paragraphs 79-109 and 607 | 1-9 |
| X | CN 114557087 A (GUANGDONG OPPO MOBILE TELECOMMUNICATIONS CORP., LTD.) 27 May 2022 (2022-05-27) description, paragraphs 28-67 | 1-9 |
| A | CN 114071734 A (SHARP CORP.) 18 February 2022 (2022-02-18) entire document | 1-9 |
| A | CN 114697922 A (SHARP CORP.) 01 July 2022 (2022-07-01) entire document | 1-9 |
| A | VIVO. "Co-channel Coexistence for LTE Sidelink and NR Sidelink" *3GPP TSG RAN WG1 #109-e R1-2203563*, 20 May 2022 (2022-05-20), entire document | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 October 2023** | **01 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/111248**

| Patent document cited in search report | | | Publication date (day/month/year) | Patent family member(s) | | | Publication date (day/month/year) |
|---|---|---|---|---|---|---|---|
| US | 2022086803 | A1 | 17 March 2022 | KR | 20220037369 | A | 24 March 2022 |
| | | | | CN | 114205863 | A | 18 March 2022 |
| CN | 114557087 | A | 27 May 2022 | WO | 2021098858 | A1 | 27 May 2021 |
| | | | | US | 2022256553 | A1 | 11 August 2022 |
| | | | | EP | 4042790 | A1 | 17 August 2022 |
| | | | | KR | 20220098730 | A | 12 July 2022 |
| CN | 114071734 | A | 18 February 2022 | WO | 2022028413 | A1 | 10 February 2022 |
| CN | 114697922 | A | 01 July 2022 | WO | 2022143641 | A1 | 07 July 2022 |

Form PCT/ISA/210 (patent family annex) (July 2022)